# EUROPEAN PATENT APPLICATION

(11) **EP 4 793 840 A1**
(43) Date of publication of application: **19.08.2026**
(21) Application number: 26158606.9
(22) Date of filing: 13.02.2026
(51) Int. Cl.: G06N 10/40, G06N 10/60

(54) **SYSTEM AND METHOD FOR PREPARING GOTTESMAN-KITAEV-PRESKILL NON-PAULI STATES OF LIGHT**

(30) Priority: 14.02.2025 IN 202511012868
(71) Applicant: Xanadu Quantum Technologies Inc., Toronto, ON M5G 2C8 (CA)
(72) Inventor: DAUPHINAIS, Guillaume, Toronto, ON M5G 2C8 (CA); FEDER, David, Calgary, AB T3B 2V3 (CA); KHALEDY, Fariba Hosseinynejad, Calgary, AB T3B 2V3 (CA); SRIDHARAN, Pavithran Iyer, 400076 Mumbai (IN)
(74) Representative: Hoyng Rokh Monegier B.V.

(57) **Abstract**

The system can include a first state factory configured to generate a sequence of first sensor states; a second state factory configured to generate a sequence of second sensor states; one or more beamsplitters optically coupled to the first state factory and to the second state factory, operable to interact the first sensor states with the second sensor states in a manner to generate entangled cluster states having multiple modes; and a homodyne detector optically coupled to an output of the one or more beamsplitters and operable to perform a homodyne measurement on a second subset of the modes at a measurement angle in phase space, the homodyne measurement causing the encoding of the non-Pauli states in a first subset of the modes.

## Description

### FIELD

The present disclosure is related to quantum optical circuits, and more specifically, to the generation of Gottesman-Kitaev-Preskill (GKP) quantum states of light for use in quantum computing, and more specifically are the Pauli operators of the GKP encoded qubits s such as "magic" states.

### BACKGROUND

Quantum computing is a type of computation which leverage one or more quantum mechanical effects, such as superposition, interference, and entanglement. Devices that perform quantum computations are known as quantum computers. Most quantum computing models are based on the quantum bit, or "qubit", which can be in different superpositions of 1 and 0 at once. Qubits are used to encode quantum information. Gottesman-Kitaev-Preskill (GKP) quantum states, which can be encoded in photons, are a topic of research for encoding qubits, namely for error correction and error tolerance. Systems used to generate GKP quantum states are commonly referred to in the art as GKP state factories, or colloquially as "breeders".

### SUMMARY

Universal fault-tolerant quantum computers have the potential to outperform classical computers at certain tasks. Fault tolerance - the ability to perform quantum computation in the presence of noise provided that the noise is below some threshold - can be facilitated using quantum error correction schemes. Universality - the ability to apply any quantum gate - requires the preparation of certain states, gates, and/or measurements.

Different forms of quantum computing exist, which typically involve using two or more quantum subsystems interconnected to one another in a manner to allow quantum interaction, typically quantum entanglement.

In adiabatic quantum computing, a specific problem is posed in the form of a configuration of interconnection between quantum subsystems which can communicate directly with one another, and the solution to the problem appears in the form of a ground state of the overall system.

In gate-based quantum computing, which can provide a "universal" computing approach, quantum gates are applied in a controlled manner. There are two common types of approaches. In the standard circuit-based model of quantum computing, quantum states are initialized in the form of a plurality of quantum subsystems, and a sequence of gates referred to as a circuit is applied by controlling the quantum interaction between some of the quantum subsystems using devices commonly referred to as couplers. The couplers are used to selectively allow or prevent the interaction between corresponding quantum subsystems. A measurement is then applied to the quantum subsystems to conclude the quantum computation.

Measurement-based quantum computation (MBQC) differs from standard circuit-based quantum computation but has been shown to have the potential to be mathematically equivalent. In measurement-based quantum computation, quantum states are initialized and entangled into cluster states. The application of the gates is performed by the way the measurement is applied, and more specifically, as a sequence of adaptive measurements where the way subsequent measurements are performed depends on the results of previous measurements. In MBQC, measurements of the quantum states (e.g., homodyne measurements of entangled photonic states) are what perform the quantum logic operations. In one example of photonic MBQC, several photonic states (e.g., GKP states, squeezed states) are produced and then entangled into a "cluster state," (e.g., a 3D lattice of optical modes). Measurements are then performed on the cluster state. These measurements are used for error correction and to perform MBQC. Therefore, in MBQC, quantum "gates" are implemented by performing informed measurements, though MBQC maps perhaps less directly to the "circuits" of the standard circuit-based model.

Clifford quantum computation (quantum computing/computation will be referred to herein as QC for short, hence - Clifford QC) refers to quantum computation that makes use of operations restricted to Pauli eigenstate preparation, Clifford gates, and Pauli measurements. Clifford QC, while providing the necessary tools for quantum error correction, is not universal as some quantum gates cannot be represented or well approximated by a finite or infinite number of Clifford operations. To achieve a universal fault-tolerant quantum computer that can outperform classical computers, Clifford QC can be supplemented by a non-Clifford resource (i.e., a non-Clifford preparation, gate, or measurement). One popular example of a non-Clifford resource is a non-Pauli eigenstate referred to as a "magic state."

In continuous-variable (CV) quantum computation, wherein the Hilbert space is infinite dimensional, Gaussian QC (comprising Gaussian state preparation, Gaussian operations, and homodyne detection) is analogous to Clifford QC. Examples of continuous-variable QC architectures include optical modes, microwave-cavity modes, and vibrational modes of trapped ions. Photonic CV QC architectures may receive a particular level of interest due to scalability and the ability to leverage existing photonic technologies. Analogously, Gaussian QC on its own is not universal. A non-Gaussian resource is required to supplement Gaussian QC for it to be universal and outperform classical computers.

Bosonic quantum error-correcting codes (or simply bosonic codes) embed discrete quantum information into CV systems. In doing so, they map CV noise into effective noise acting on the encoded qubits. One popular example of a bosonic code is the Gottesman-Kitaev-Preskill (GKP) code, explained in more detail further below. Logical-Clifford QC can then be done using logical-Clifford operations, wherein Clifford logic gates are acted on the encoded qubits. Logical-Clifford QC can be supplemented with logical-non-Clifford QC to be universal. A unique property of the GKP code is that it allows logical-Clifford QC and CV-level error correction to be implemented using Gaussian QC along with a supply of (non-Gaussian) logical-Pauli eigenstates. States referred to as "magic states" are eigenstates of a non-Pauli operator and may be used as a non-Clifford resource. Such states can alternately be referred to as non-Pauli eigenstates, or non-Pauli states.

However, in practice, there are challenges to implementing a non-Gaussian resource into an architecture in a way that allows it to be practical and suitable for use in efficient quantum computation. In one example, cubic phase states are a type of magic state and can be considered as a potential non-Clifford/non-Gaussian resource. Cubic phase states, as well as non-Gaussian measurements, can be used to implement cubic phase gates. However, cubic phase states are not GKP states, and have proven, in some embodiments, to be relatively challenging to produce, particularly in photonic architectures, due to an observed difficulty to induce non-linear behavior in optics. Indeed, cubic phase states may involve highly non-linear processes to produce, which may be difficult to implement in optics.

For photonic QC architectures, protocols to produce Pauli GKP states using squeezed cat state breeding and amplification can be used. One potential scenario to consider is the adaptation of Pauli GKP state production protocols to also produce magic states, making use of the GKP Pauli eigenstates and/or sensor states that these protocols can produce. There are different types of architectures other than photonic which can be adapted to GKP encoding, such as superconductor (e.g., transmon), microwave resonators, and trapped ion for instance. Such other architectures may operate based on standard circuit-based models of quantum computation rather than measurement-based quantum computation, for instance.

With respect to the preparation of non-Pauli (e.g., magic) states for GKP-based architectures, different methods may be used. For instance, in the case of photonic architectures, it was found that GKP magic state preparation can be achieved through photon-number-resolving (PNR) measurement on a GKP Bell pair, or through GKP quantum error correction on vacuum states. However, the **PNR** approach on a GKP Bell pair does not work on displaced GKP states, which many GKP production protocols would result in. For instance, a state breeding and amplification process, such as squeezed cat state breeding and amplification for instance, typically produces displaced GKP states. To utilize the PNR approach, the displaced GKP states would need to undergo a corrective displacement, which would introduce additional loss. Therefore, such approaches do not satisfy a need to have a method of preparing magic states for GKP-based architectures that only requires one high-quality GKP state. Moreover, such approaches do not satisfy a need to have a method of preparing magic states for GKP-based architectures which can be done with displaced GKP states.

Considering the above considerations, H-type magic states were considered as a potential candidate for a magic state which may be used in a GKP-based architecture. H-type magic states include Hadamard eigenstates and Clifford equivalents to Hadamard eigenstates (i.e., states that can be rotated to a Hadamard eigenstate by a Clifford rotation).

In one embodiment, it was found that one way of producing an H-type magic state suitable in at least some instances of GKP-based architectures includes entangling a multi-peak state and a GKP sensor state. Performing a Pauli measurement of at least one of two non-commuting quantum mechanical observables on the entangled state in the quantum system subsequently to the quantum entanglement can generate the H-type magic state.

While such techniques can be suitable to a certain degree, there always remains room for improvement, namely in increasing the efficiency of production and limiting the costs, of non-Pauli eigenstate preparation. Indeed, generating non-Pauli eigenstates using state preparation techniques may be difficult, in the sense that it can involve the use of a lot of components and considered unsatisfactory for reasons such as costs, noise generation, etc.

Measurement-based quantum computation (MBQC) is a cornerstone of qubit-based quantum information processing, where an entangled cluster state is used as a resource and single-qubit measurements drive the computation. In the discrete case, the measurement outcome teleports logical operations onto the remaining qubits, with corrections applied through classical feedforward. More specifically, in qubit MBQC, a multi-qubit cluster state is prepared (typically by applying controlled-Z (CZ) gates to qubits in the |+> state). Single-qubit measurements in appropriate bases steer the computation. Measurement outcomes determine the effective gates applied to the remaining qubits; classical feedforward is used to correct for random byproduct operators. The measurement effectively "teleports" a gate from the measured qubit to the unmeasured one, implementing logical operations conditionally.

It was found that the teleporting of gates such as referred to above in the context of MBQC can be used not only in the context of performing quantum computation, but also in the context of state preparation, in a continuous-variable (CV) GKP scheme, and could lead namely to the preparation of non-Pauli eigenstates.

In accordance with one aspect, there is provided a method to prepare a Gottesman-Kitaev-Preskill (GKP) non-Pauli eigenstate state of light comprising : generating a first sensor state; generating a second sensor state; generating an entangled cluster state having multiple modes, including interacting the first sensor state with the second sensor state in a beamsplitter; and encoding the GKP non-Pauli eigenstate in a first subset of the modes, including performing a homodyne measurement of a second subset of the modes at a measurement angle in phase space.

It may be provided that the method is performed by a quantum computer having a first state factory, a second state factory, the beamsplitter, a homodyne detector, and a controller, the controller having a processor and a memory, the memory having stored thereon instructions which, when executed upon by the processor, cause the first state factory to generate the first sensor state, cause the second state factory to generate the second sensor state, cause the beamsplitter to generate the entangled cluster state, and cause the homodyne detector to encode the non-Pauli eigenstate. In various embodiments the non-Pauli eigenstate is encoded by performing an informed homodyne measurement, particularly by using a homodyne measurement subsystem having a homodyne measurement detector. In various embodiments the first and second subsets of modes are mutually exclusive.

It may be provided that the entangled cluster state has only two modes including a first mode and a second mode, and wherein the beamsplitter is a 50-50 beamsplitter, wherein said interacting includes applying a logical CZ gate with the beamsplitter.

It may be provided that the first subset of the modes is a first mode, and the second subset of the modes is a second mode, the encoding includes teleporting a gate onto the second mode and rotating the second mode's logical state on the Bloch sphere.

It may be provided that the entangled cluster state has more than two modes, the first subset being mutually exclusive to the second subset; and the said beamsplitter is a first beamsplitter, wherein said interacting involves at least a second beamsplitter in addition to the first beamsplitter.

It may be provided that a rotation is applied to the entangled cluster state at a rotation angle.

It may be provided that the rotation angle is controlled based on the homodyne measurement at the measurement angle to result in said encoding of the first subset of the modes to encode the non-Pauli eigenstate.

It may be provided that the rotation angle is controlled.

It may be provided that the controlling the measurement angle for said homodyne measurement results in said encoding of the first subset of the modes to encode the non-Pauli eigenstate.

It may be provided that the non-Pauli eigenstate is a magic state.

It may be provided that the first sensor state and the second sensor state are squeezed GKP sensor states.

It may be provided that the squeezed GKP sensor state has a peak spacing of $2 \sqrt{2 π}$*.*

It may be provided that said generating a first sensor state and said generating a second sensor state include performing a squeezed cat state breeding and amplification process.

It may be provided that said generating a first sensor state and said generating a second sensor state are performed using multiple Gaussian Boson Sampling (GBS) devices and multiplexing.

It may be further be provided to generate a Pauli eigenstate, generate a cluster state including entangling at least the non-Pauli eigenstate with the Pauli eigenstate, and apply a gate to the cluster state including performing a Pauli measurement on the cluster state.

It may be further provided to generate a squeezed state, wherein said generating the cluster state further includes entangling the squeezed state with at least the non-Pauli eigenstate and the Pauli eigenstate.

It may be further provided to repeat the steps of generating the cluster state and performing the Pauli measurement on the cluster state over n iterations, until a quantum computation is completed, wherein said performing the Pauli measurement of a given one of the n iterations is based on results of the Pauli measurement of one or more previous ones of the n iterations, in a manner to apply the corresponding gate.

It may be provided that the generating the cluster state at a given one of the n iterations further includes producing a plurality of spatially entangled resource states, delaying a subset of the plurality of spatially entangled resource states, and entangling, in the time domain, a subset of the spatially entangled resource states which have not been subject to the delaying with the subset of delayed resource states from a previous one of the n iterations.

It may further be provided to generate a cluster state, entangle the non-Pauli eigenstate with the cluster state, and apply a gate to the cluster state entangled with the non-Pauli eigenstate, said applying a gate including performing a Pauli measurement on the cluster state entangled with the non-Pauli eigenstate.

It may be further provided to repeat the steps of generating the cluster state and performing the Pauli measurement over n iterations, until a quantum computation is completed, wherein said performing the Pauli measurement of a given one of the n iterations is based on results of the Pauli measurement of one or more previous ones of the n iterations, in a manner to apply the corresponding gate.

It may be provided that said generating the cluster state at a given one of the n iterations further includes producing a plurality of spatially entangled resource states, delaying a subset of the plurality of spatially entangled resource states, and entangling, in the time domain, a subset of the spatially entangled resource states which have not been subject to the delaying with the subset of delayed resource states from a previous one of the n iterations.
In accordance with another aspect, there is provided a system for preparing Gottesman-Kitaev-Preskill (GKP) non-Pauli eigenstate states of light comprising : a first state factory configured to generate a sequence of first sensor states; a second state factory configured to generate a sequence of second sensor states; one or more beamsplitters optically coupled to the first state factory and to the second state factory, operable to interact the first sensor state with the second sensor state in a manner to generate an entangled cluster state having multiple modes; and a homodyne measurement subsystem having a homodyne detector optically coupled to an output of the one or more beamsplitters and operable to perform a homodyne measurement on a second subset of the modes at a measurement angle in phase space, the homodyne measurement causing the encoding of the non-Pauli states in a first subset of the modes.

In various embodiments the homodyne measurement is operable to project the first subset of the modes to encode the non-Pauli eigenstate.

In various embodiments the non-Pauli eigenstate is encoded by performing an informed homodyne measurement, particularly by using a homodyne measurement subsystem having a homodyne measurement detector. In various embodiments the first and second subsets of modes are mutually exclusive. In various embodiments the first state factory is a first breeder and/or the second state factory is a second breeder. In various embodiments the first and/or second breeders are configured to produce GKP sensor states, and/or other types of GKP states, from states which are not suitable GKP sensor states, particularly states having a fidelity which is too low to be considered satisfactory for use as is. In various embodiments breeding involves a cascade, or tree-like circuit, with lesser and lesser outputs at each successive one of one or more breeding stages.

In various embodiments the system comprises a quantum computer, the quantum computer having the first state factory, the second state factory, the beamsplitter, the homodyne detector, and a controller having a processor and a memory, the memory having stored thereon instructions operable by the processor to cause the quantum computer to perform the steps of generating the plurality of successive first sensor states, generating the plurality of successive second sensor states, generating the plurality of successive entangled cluster states, and encoding the GKP non-Pauli eigenstates.

In various embodiments the entangled cluster state has only two modes including a first mode and a second mode, and wherein the beamsplitter is a 50-50 beamsplitter, wherein said interacting includes applying a logical CZ gate with the beamsplitter.

In various embodiments the first subset of the modes is a first mode, and the second subset of the modes is a second mode, the encoding includes teleporting a gate onto the second mode and rotating the second mode's logical state on the Bloch sphere.

In various embodiments the entangled cluster state has more than two modes, the first subset being mutually exclusive to the second subset; and the said beamsplitter (16) is a first beamsplitter, wherein said interacting involves at least a second beamsplitter in addition to the first beamsplitter.

In various embodiments the system comprises applying a rotation to the entangled cluster state at a rotation angle, the rotation angle being controlled based on the homodyne measurement at the measurement angle to result in said encoding of the first subset of the modes to encode the non-Pauli eigenstate.

In various embodiments the system comprises comprising controlling the measurement angle for said homodyne measurement to result in said encoding of the first subset of the modes to encode the non-Pauli eigenstate.

In various embodiments the non-Pauli eigenstate is a magic state.

In various embodiments the first sensor state and the second sensor state are squeezed GKP sensor states.

In various embodiments said generating a first sensor state and said generating a second sensor state are performed using multiple Gaussian Boson Sampling (GBS) devices and multiplexing.

In various embodiments the system comprises generating a Pauli eigenstate, generating a cluster state including entangling at least the non-Pauli eigenstate with the Pauli eigenstate, and applying a gate to the cluster state including performing a Pauli measurement on the cluster state; and repeating the steps of generating the cluster state and performing the Pauli measurement on the cluster state over n iterations, until a quantum computation is completed, wherein said performing the Pauli measurement of a given one of the n iterations is based on results of the Pauli measurement of one or more previous ones of the n iterations, in a manner to apply the corresponding gate.

In various embodiments said generating the cluster state at a given one of the n iterations further includes producing a plurality of spatially entangled resource states, delaying a subset of the plurality of spatially entangled resource states, and entangling, in the time domain, a subset of the spatially entangled resource states which have not been subject to the delaying with the subset of delayed resource states from a previous one of the n iterations.

In various embodiments the system comprises generating a cluster state, entangling the non-Pauli eigenstate with the cluster state, and applying a gate to the cluster state entangled with the non-Pauli eigenstate, said applying a gate including performing a Pauli measurement on the cluster state entangled with the non-Pauli eigenstate; and repeating the steps of generating the cluster state and performing the Pauli measurement over n iterations, until a quantum computation is completed, wherein said performing the Pauli measurement of a given one of the n iterations is based on results of the Pauli measurement of one or more previous ones of the n iterations, in a manner to apply the corresponding gate.

In various embodiments said generating the cluster state at a given one of the n iterations further includes producing a plurality of spatially entangled resource states, delaying a subset of the plurality of spatially entangled resource states, and entangling, in the time domain, a subset of the spatially entangled resource states which have not been subject to the delaying with the subset of delayed resource states from a previous one of the n iterations.

In accordance with another aspect, there is provided a computer readable medium having stored thereon computer-executable instructions that, when executed by a processor, cause a quantum computer to: generate a first sensor state; generate a second sensor state; generate an entangled cluster state having multiple modes, including interacting the first sensor state with the second sensor state in a beamsplitter; and encode a GKP non-Pauli eigenstate in a first subset of the modes, including performing a homodyne measurement of a second subset of the modes at a measurement angle in phase space.

All technical implementation details and advantages described with respect to a particular aspect of the present invention are self-evidently mutatis mutandis applicable for all other aspects of the present invention.

In an example measurement-based quantum computation embodiment, the non-Pauli eigenstate can be used as a non-Clifford resource and entangled with one or more Clifford resources, such as a Pauli eigenstate. Non-Clifford resource states and Clifford resource states may be collectively referred to as resource states. A resource state may be entangled to one or more other resource states, and potentially not only in the spatial domain but also in the time domain, to form a cluster state. Resource states entangled in the spatial domain may be referred to as spatially entangled resource states and may directly constitute a cluster state. Resource states, or spatially entangled resource states, may then be entangled in the time domain, in which case they may be said to form temporal layers prior to entangling in the time domain. A cluster state may thus alternately be formed by entangling a plurality of temporal layers in the time domain. A Pauli measurement can be applied to the cluster state in a manner to apply a gate. A number of iterations may be performed, including generating a next temporal layer of the cluster state and a next Pauli measurement, and the results of one or more of the previous Pauli measurement(s) can be used to inform the way the next Pauli measurement will be performed, in a manner to apply the gate, and so forth, until the quantum computation is complete.

It will be noted that this specification concerns the practical, tangible applications of quantum computing. As well known and understood by persons having ordinary skill in the art, in practical quantum computation, observed (measurable) states seldom correspond to the mathematical definition, or to a mathematically perfect expression of such states. A practical state can be said to be a state of a given type when there is sufficient correlation between the features of the practical state and its mathematical definition to allow its use as such in the practical context of quantum computations. In this context, "said to be" is often referred to alternately as "heralded". Heralding a state thus corresponds to identifying the state as a suitable practical candidate for use in a given theoretical context. Accordingly, in this specification, expressions such as GKP sensor state, GKP state, cat state, multi-peak state, etc., are not to be interpreted as limited to theoretically (mathematically) perfect instances of such states and are to be interpreted as including practical approximations to the theoretically perfect instances of such states. In practice, when implementing a quantum system, one can try to make a given state as close as possible to a mathematical definition of such a state, taking into consideration hardware limitations inherent to any practical implementation, but in many cases, as long as the state is close enough to the mathematical definition to be practically useful in performing a quantum computation, it can be deemed suitable for practical purposes and can be understood to constitute a practical expression of the state's definition in a real-world implementation. Indeed, even relatively inefficient quantum computations can be of practical interest in some cases.

Many further features and combinations thereof concerning the present improvements will appear to those skilled in the art following a reading of the instant disclosure.

### DESCRIPTION OF THE FIGURES

In the figures,
Fig. 1 is a schematic view of an example quantum computer;
Fig. 2 is a schematic diagram of an example system for preparing non-Pauli eigenstates of light;
Fig. 3 is a schematic diagram presenting an example method for preparing non-Pauli eigenstates of light;
Fig. 4 is a graph plotting example fidelity (y3) and probability (yr) vs. q-homodyne measurement outcome (y-axis) for *θ*=atan(270/353)=0.6529, β = 0.05, at a cutoff of 10⁻⁴;
Fig. 5 is a graph plotting probability vs. q-homodyne measurement outcome (y-axis) for *θ*=atan(270/353)=0.6529, β = 0.05, at a cutoff of 10⁻⁴;
Fig. 6 shows a finite-energy square lattice GKP |0〉 state, or sensor state, including a superposition of displaced, squeezed states;
Fig. 7 shows an example of a Gaussian Boson Sampling (GBS) source, compatible with some embodiments;
Fig. 8 shows an example of a GBS source formed of individual sources and a multiplexer (MUX), compatible with some embodiments;
Fig. 9 is a plot illustrating an example of the encoding of qubit logical states on a continuous-variable physical parameter;
Fig. 10 is a flow chart illustrating an example process of performing a quantum computation using a quantum computer such as shown in Fig. 1; and
Fig. 11 is a schematic view of an example computer.

### DETAILED DESCRIPTION OF EXAMPLE EMBODIMENTS

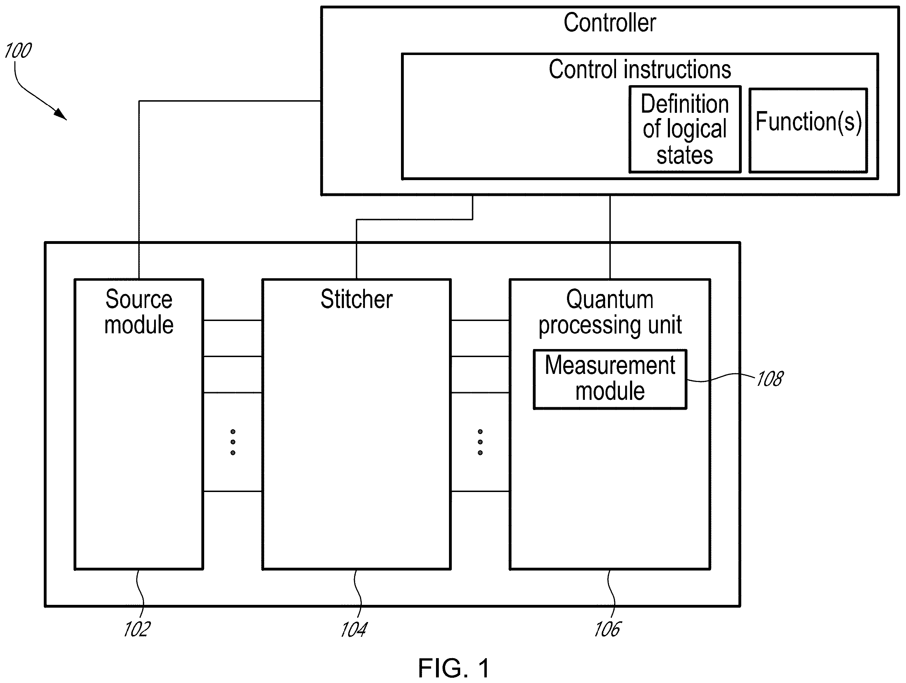

FIG. 1 illustrates a simplified system-level block diagram of an exemplary quantum computer 100 in accordance with the present disclosure. The components of the quantum computer 100, described in more detail below, can be configured to one or more of: create, generate, shape, measure, decode, and error-correct a selected entangled cluster state that serves as a resource for measurement-based fault-tolerant quantum computation. For example, the quantum computer 100 may be a measurement-based quantum computer in the Raussendorf-Harrington-Goyal (RHG) model using continuous-variable (CV) qubits. Although an example is described below in the context of a measurement-based quantum computing model based on a photonic platform, it is understood that embodiments of the methods described herein are also applicable to other quantum platforms, including superconducting qubits, trapped ion qubits, and any other quantum platforms, and may be of use in circuit-based quantum computing models and even potentially in adiabatic quantum computing models.

In some embodiments, the quantum computer 100 includes a source module 102, a stitcher 104, and a quantum processing unit (QPU) 106. Each of the source module 102, the stitcher 104, and the QPU 106 represents logical functionality that can be implemented exclusively via hardware, exclusively via software, or via a combination of hardware and software. The functional delineation between the separate elements within the quantum computer 100 may only be a conceptual representation of the overall operation of the quantum computer 100.

The source module 102 is configured to generate a plurality of input quantum states. In the case of photonic quantum platforms, the source module 102 may include a plurality of Gaussian Boson Sampling (GBS) sources each configured to generate a continuous-variable (CV) state of light, such as Gottesman-Kitaev-Preskill (GKP) state. Data is mapped onto the generated CV states. Additional details about GKP encoding can be found in "Encoding a Qubit in an Oscillator" by D. Gottesman et al., Physical Review Letters A (64), 012310 (2001), the disclosure of which is incorporated herein by reference in its entirety. In some embodiments, the fidelity of GKP state generation may be boosted by multiplexing the outputs of multiple GBS sources. Additional details regarding GBS source modules can be found, by way of example only, in U.S. Patent No. 11,341,428 by Bourassa *et al.,* entitled "Scalable Photonic Quantum Computing with Hybrid Resource States" [Bourassa], the entire contents of which are incorporated by reference herein for all purposes.

In some embodiments, the source module 102 may include a local pulse train generator. The local pulse train generator is configured to generate a train of local optical pulses that are also referred to as a local oscillator (LO) signal that is operably coupled to elements of quantum computer 100, such as QPU 106, and particularly to the optical detectors (e.g., homodyne detectors) used for projective measurements and for measurement-based quantum computation.

A steady supply of CV states that include both encoded bosonic qubits and squeezed vacuum states may be generated by the source module 102 and sent to the stitcher 104 via a network of optical connections. In some embodiments, the source module 102, the stitcher 104, and the QPU 106 are implemented on photonic integrated circuits (PICs), and the optical network may be implemented using optical fibers compatible with existing optical technologies, which may have a lower level of propagation loss compared to on-chip waveguides. In some embodiments, the source module 102 generates the desired CV states, which may include H-type magic states, by performing Pauli measurements on intermediary CV states within the source module 102. These H-type magic states can then be used as a non-Clifford resource to perform universal quantum computation. In the case of photonic quantum computing architectures, the Pauli measurements may be performed by way of homodyne detection.

The states generated by the source module 102 are provided to the stitcher 104, which is configured to stitch the input states into a lattice structure in accordance with a specific encoding scheme. In some embodiments, the stitcher 104 can interfere these states, such as through a network of static 50:50 beamsplitters with phase delays or reconfigurable beamsplitters into what is referred to as a higher dimensional multimode entangled state, referred to hereinbelow as a cluster state for short, before sending/routing the multimode entangled state to the QPU 106 to be processed. As used herein, "stitching" refers to the creation/imposition of entanglement between the different modes at different lattice sites. In some embodiments, during operation of the quantum computer 100, non-deterministically generated encoded qubits and non-Gaussian states of light can be stitched into a random but known subset of the sites (by virtue of them being generated at a random subset of locations, and not being generated at other locations), while the remaining sites are populated with deterministically generated Gaussian states, such as squeezed vacuum states for example. An indication of whether or not a location is within the subset of the sites is provided. Additional details of higher dimensional multimode entangled states may be found in Bourassa, cited above.

Measurements can be performed on the higher dimensional multimode entangled state by a measurement module 108 of the QPU 106 to provide electric field quadrature information (e.g., the position or amplitude quadrature referred to herein as the "q quadrature" and the momentum or phase quadrature referred to herein as the "p quadrature"). The measurements are performed by one or more optical detectors of the measurement module 108. In some embodiments, the optical detectors are homodyne detectors which can be used to perform measurements on each macronode of the multimode state to reduce each macronode into a single node with multiple edges. The measurement outcomes can be used by the quantum computing system to perform error correction and can also be utilized by the system to perform measurement-based quantum computation (MBQC). The optical detectors, (e.g., homodyne detectors) may be configured to perform quadrature measurements by interfering the optical modes of an input entangled resource state and the train of local optical pulses on a beamsplitter and detecting the optical power difference of the two beam splitter outputs as an indication of the modal property(ies) of the quantum state of the given optical pulse. The measurement outcomes collected on the multimode entangled states (i.e., at the physical hardware layer) can be processed together to implement one or more aspects of an error correction code. The measurement results can be processed by the QPU 106, which may be configured to take, as inputs, the measurement outcomes that have been realized to perform the logical operations.

The control of the at least one of and typically each one of the source module 102, stitcher 104, and quantum processing unit 106 cannot be performed manually and is performed via hardware and software elements which will be referred to herein as a controller. The controller can be a classical computer, i.e., a computer based on bits rather than qubits for computation, including at least one processor wherein control instructions are stored in computer-readable memory and are accessible to the at least one processor. The control instructions can include a plurality of functions, such as a source module control function, a stitcher module control function, and a quantum processing unit control function, each of which can include a plurality of sub-processes. The control instructions typically include a definition of logical states which are mapped to the specific hardware elements of the given embodiment.

Protocols using squeezed cat breeding and amplification can be a powerful tool to generate Pauli GKP states. Using the same phase estimation protocol used to generate Pauli eigenstates may be considered unfeasible for the generation of magic states without using non-Clifford gates. However, it was found that at least some embodiments, producing non-Pauli eigenstates of light using standard photonic state factories was possible.

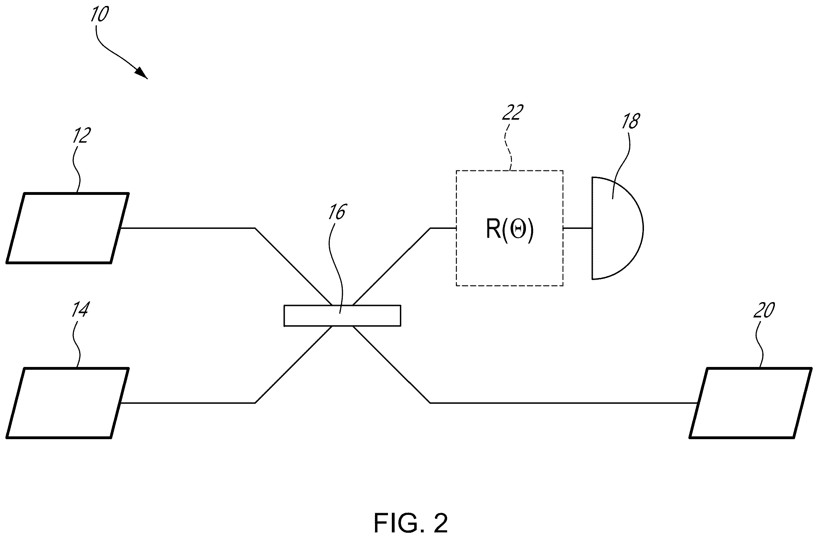

Indeed, referring to Fig. 2, it was found that such state factories could produce GKP sensor states, and that such GKP sensor states could be used to produce non-Pauli eigenstates of light. GKP sensor states can be produced by "squeezing" operations on different GKP states, in which case they may be referred to as squeezed GKP sensor states, but other ways of producing GKP sensor states exist as well.

An example method to prepare a GKP non-Pauli eigenstate of light will now be described with reference to the example system 10 presented in Fig. 2. The method can use a first sensor state and a second sensor state which may both be produced using commonly used state factories 12, 14 (examples of which will be presented below). The state factory used to generate the first state can be referred to as the first state factory, and the state factory used to generate the second state can be referred to as the second state factory, in a context where the expressions first and second are used simply to facilitating discerning one from the other, but without any implicit limitation. The first sensor state and the second sensor state can be quantumly interacted with one another using a beamsplitter 16 in a manner to generate an entangled cluster state having multiple modes. A first subset of the modes can be projected to encode the non-Pauli eigenstate by performing an informed homodyne measurement (e.g., using a homodyne measurement subsystem having a homodyne measurement detector 18), similarly to the way gates are teleported to subsets of qubits to perform quantum computations in accordance with MBQC. In the example system presented in Fig. 2, the beamsplitter can be optically coupled to the state factories 12, 14, to the homodyne detector 18 and to the output 20.

In one example, GKP sensor states are interacted to produce a cluster state having two modes, in which case the beamsplitter can be a 50-50 beamsplitter used to apply an equivalent of a logical controlled-Z (CZ) gate. Indeed, while a beamsplitter applied to sensor states isn't technically a CZ gate, as it doesn't preserve the code space of the GKP (so sensor states can be thought of as specific logical states in a rectangular GKP encoding), but the beamsplitter both entangles the modes, and changes the encoding of the sensor states in a way that if you were to apply a real CZ gate on 2 square |+> GKP's, a same state could be achieved as a result. The measurement can then be performed in an informed manner, either by applying a rotation upstream of the measurement (e.g., using a phase shifter 22), or by controlling the measurement angle in phase space (both these approaches can be considered equivalent in some embodiments, and optionally combined), in a manner to effectively teleport a non-Clifford gate onto the other mode. This ultimately rotates the other mode's logical state on the Bloch sphere. Indeed, as will be demonstrated further below, some of these rotations yield stable points which can correspond to non-Pauli eigenstates.

In other words, one of the modes can be sent through one or more phase shifters 22 applying a specific rotation in phase space before being sent in a homodyne detector 18 of a fixed angle. Alternately, the mode can be directly sent in a homodyne detector 18 and the phase of the local oscillator used in the homodyne detector can be changed. Both specific implementations may achieve the same result, while differing in terms hardware implementation.

The specific angle for the phase shifter or, equivalently, the angle of homodyne measurement can be chosen specifically to target the production of the wanted specific non-Pauli states with high probability. Various specific non-Pauli states can be targeted, offering flexibility in terms of which logical states is being prepared.

In other example embodiments, the GKP sensor states can be interacted in a manner to produce an entangled state having more than two modes (all within the logical mode space, as in the two-mode scenario). One way to achieve this is to use more than one beamsplitter 16, and this may not technically involve a logical CZ gate while otherwise generally following the same logic as the two-mode scenario. **It** is expected that there can be significant uses to such higher mode cluster states upon further investigation of the topic. For instance, an expected use of the multi-mode scenario can include the preparation entangled multiqubit non-Pauli GKP states, including for example states suitable to implement Toffoli gates in a measurement-based way, or the creation of dumbbell with 1 or more modes being a magic state, allowing to incorporate such states more easily in a passive architecture. The expression "first subset of the modes" and "second subset of the modes" are used to encompass either the two-mode scenario or the more-than-two mode scenario. In the case of the latter, the subsets of modes can include more than one mode. The subset of modes can be mutually exclusive.

It will be understood that depending on the embodiment, the homodyne measurement angle in phase space, an upstream rotation angle, or both, may be controlled in a manner to reach the desired outcome of an output in a non-Pauli eigenstate. The homodyne measurement angle can be controlled using a programmable homodyne measurement subsystem. An upstream rotation angle can be controlled by a programmable phase shifter. The control can be performed using a controller having a classical computer, for example.

A more detailed example will now be presented. In this example, continuous-variable (CV) scheme uses GKP encoded states-promising candidates for robust quantum error correction-to implement a measurement-based state preparation protocol. Two sensor states are prepared as squeezed plus GKP states S(√2)|+> and sent through a 50/50 beamsplitter. In the GKP encoding, the beamsplitter acts as a logical CZ gate, yielding an entangled two-mode (or two-qubit) cluster state written as CZ |+>|+> = |0>|+> + |1>|->. This ensures that the overall state remains within the GKP code space. A phase shifter (which acts as a rotation gate R(θ)) is applied to the first mode. These continuous parameters (θ and the measurement outcome q) provide a degree of control that is not typically available in discrete qubit systems.

A q-homodyne measurement is performed on the first mode. While the measurement projects the first mode out of the GKP code space, the second mode remains logical. The measurement outcome, combined with the tunable phase shift θ, effectively teleports a gate onto the second mode. This operation rotates the second mode's logical state on the Bloch sphere, analogous to the teleportation of a gate in qubit MBQC.

This approach can be compared to a discrete case. In a discrete system, a cluster state is prepared as a resource, and the first qubit is measured in the σ·n basis. Depending on the outcome, you either get the desired state, cos(θ/2)|+> + e^(iϕ) sin(θ/2)|->, or a Pauli Z applied on it. However, in the GKP encoding, we don't have direct access to a general Pauli σ·n measurement. Instead, we access Pauli X via q-homodyne measurement, Pauli Y via q-p homodyne measurement, and Pauli Z via p-homodyne measurement. In other words, the combination of the phase shift (θr) and q measurement can be used to effectively implement the measurement in the desired σ·n basis.

For example:
At time = 0: {θr = 0 and q} corresponds to a q-homodyne measurement, acting as Pauli X, and we observe stable output states on the Bloch sphere at X-plus and X-minus.

At time = 0:41: {θr = π/4 and q} corresponds to a q-p homodyne measurement, acting as Pauli Y, with stable outputs at Y-plus and Y-minus.

At time = 1:22: {θr = π/2 and q} corresponds to a p-homodyne measurement, acting as Pauli Z, with stable points at Z-plus and Z-minus.

Between these specific angles, we observe rapid movement on the Bloch sphere, and there appear to be additional stable points that warrant further investigation.

An entangled resource state (e.g., two-mode GKP cluster state) can thus be used to drive computation through measurement, and the measurement outcomes determine the effective logical operation on the unmeasured part of the system, effectively "teleporting" gates. The measurement outcome can inherently be mapped onto a rotation of the logical state. The CV Scheme can use GKP states with a grid structure in phase space, offering robustness against small displacement errors. Continuous parameters (θ and q) provide a level of control that allows for the probabilistic (but heralded) generation of arbitrary states-including non-Clifford, magic states-on the Bloch sphere. The beamsplitter 16, when acting on two sensor states, can be equivalent to applying a logical CZ gate in some embodiments. This means that the system remains in the logical GKP space, preserving the error-correcting properties of the code. This can contrast with a more general CV implementation where arbitrary input states and beamsplitter parameters might take the system outside of the intended logical space.

By leveraging the tunability inherent in continuous parameters, a wide range of target states on the Bloch sphere can be accessed, including states essential for fault-tolerant quantum computation. Moreover, the preservation of the GKP code space throughout the entangling operation-via the beamsplitter acting as a logical CZ gate-can allow the system to maintain its robustness against small displacement errors.

Accordingly, the ability to probabilistically and heraldedly generate non-Clifford states within a single measurement-based framework opens new avenues for magic state generation and error-corrected quantum computation. By drawing parallels to qubit MBQC, it is expected that many conceptual tools developed in the discrete-variable realm can be adapted-and in some cases, enhanced-within the continuous-variable framework.

A theoretical demonstration of the concept described above will now be presented.

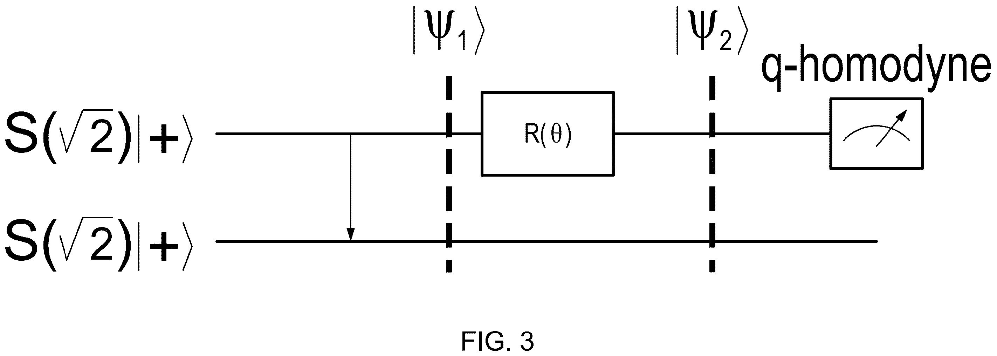

Two sensor state $S \left(\sqrt{2}\right) + = {\sum }_{j = ∞}^{+ ∞} j {\sqrt{2 π}}_{q}$ can be entangled with a beam splitter as shown in Fig. 3. A 50-50 beamsplitter can act as follows : $BS \left(π/4,0\right) {q}_{{1}_{q}} {q}_{{2}_{q}} = {\left|\frac{1}{\sqrt{2}}\left({q}_{1}-{q}_{2}\right)\right〉}_{q} {\left|\frac{1}{\sqrt{2}}\left({q}_{1}+{q}_{2}\right)\right〉}_{q}$ $\begin{matrix}BS {\sum }_{j = ∞}^{+ ∞} j {\sqrt{2 π}}_{q} {\sum }_{k = ∞}^{+ ∞} k {\sqrt{2 π}}_{q} = {\sum }_{j , k = ∞}^{+ ∞} \frac{1}{\sqrt{2}} \left(j-k\right) \sqrt{2 π} \frac{1}{2} \left(j+k\right) \sqrt{2 π} \left(2\right) \\ = {\sum }_{j , k = ∞}^{+ ∞} \left(j-k\right) \sqrt{π} \left(j+k\right) \sqrt{π} \left(3\right)\end{matrix}$

A software code can be run to find the value of *θ* that gives a fidelity close to the magic state, with a precision of 0.01. In all the following results the outcome of q-homodyne measurement on the first mode is set to zero.

**Table 2: Values of θ and corresponding fidelities**

| *θ* | Fidelity |
|---|---|
| -1.2881 | 0.9088 |
| -1.2566 | 0.9257 |
| -0.2827 | 0.9787 |
| -0.2513 | 0.9217 |
| 0.6597 | 0.9838 |
| 1.3823 | 0.9940 |

If we change the fock damping parameter *β* and cutoff we will witness a slightly drop in fidelity.

**Table 3: Data for the given θ = tan⁻¹(270/353) ≈ 0.6529**

| *β* | Cutoff | Fidelity |
|---|---|---|
| 0.05 | 10⁻⁴ | 0.991544 |
| 0.05 | 10⁻⁸ | 0.977302 |
| 0.02 | 10⁻⁸ | 0.913100 |

Here is fidelity vs. *θ* with decreasing cutoff to 10⁻⁸.

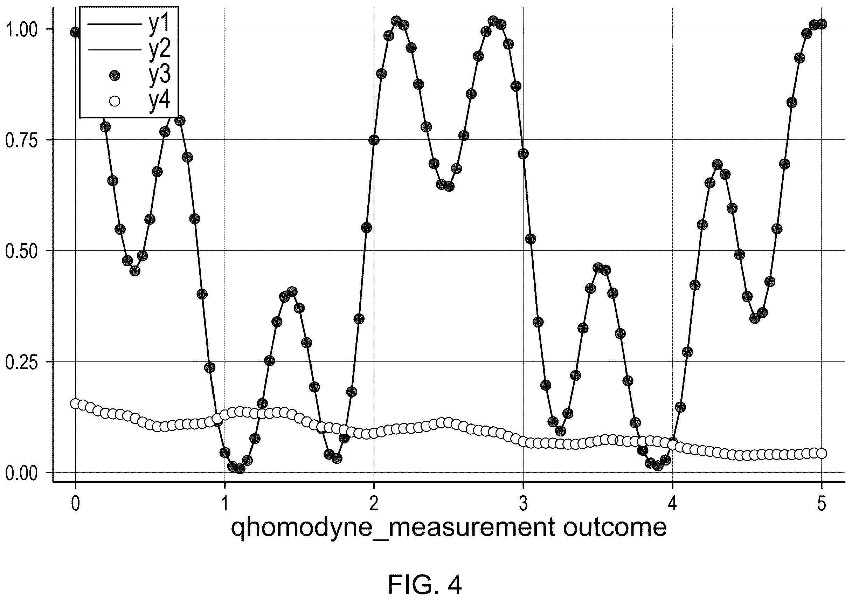

A next step can be to assess how changes in the quadrature outcome q affect the fidelity. To do this, the rotation angle may be fixed at *θ* = 0.6529 and the fidelity can be plotted versus the q-homodyne measurement outcome, such as shown by the sequence of y3 in Fig. 4.

The central peak may then be examined more closely to assess its stability and investigate how the fidelity is influenced by varying the q-homodyne measurement outcome.

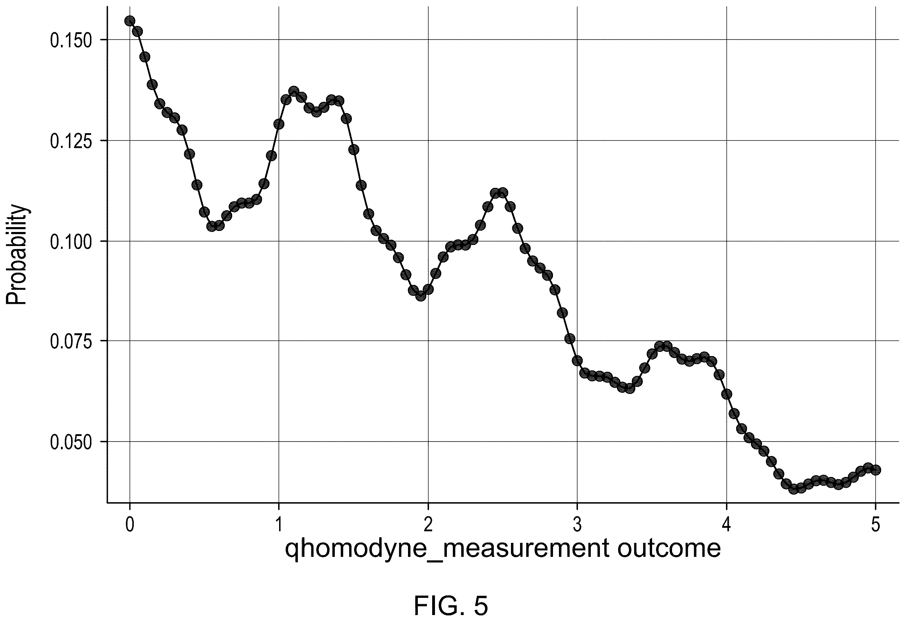

A next step can be to evaluate the probability of measuring a given q-homodyne outcome to determine if obtaining the magic state is feasible with a reasonable likelihood. This is plotted as y4 in Fig. 4. The relationship is plotted in Fig. 5. A table presenting some values of q-homodyne measurement outcome that give close fidelity to magic state can then be prepared :

**Table 4 : Values of q-homodyne measurement outcome and corresponding fidelities**

| *q* | Fidelity |
|---|---|
| 0.0 | 0.99 |
| 2.2 | 1.00 |
| 2.75 | 0.99 |
| 2.85 | 1.00 |
| 4.95 | 1.00 |
| 5.0 | 1.00 |

By contrast, fidelity vs theta using two squeezed plus states is presented in Fig 5.

In its finite-energy form, an example of a GKP state which can be referred to herein as a GKP sensor state, can be defined as a superposition of displaced, squeezed states with a specific periodic spacing in both quadratures. A larger subset of GKP states is square lattice states, which have a constant, but not specific, periodic spacing in both quadratures, with a same spacing in the two quadratures. A still larger subset of GKP states are "rectangular lattice" states which have periodic spacing in the two quadratures, but a different spacing from one quadrature to the other. GKP states which have non-rectangular lattice structures also exist and will be referred to herein as "sheared states" herein.

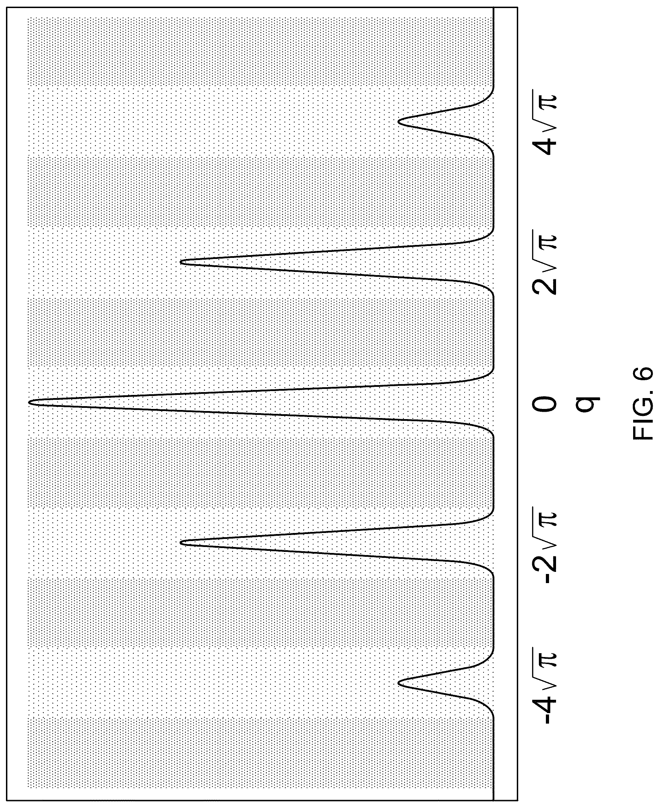

Fig. 6 shows a finite-energy square lattice GKP |0> state, or sensor state, including a superposition of displaced, squeezed states. Fig. 6 shows the spacing in the q quadrature, but it will be understood that since the state shown is a sensor state, the spacing is the same in both quadratures. Due to the shape of the wavefunction (see Fig. 6), the squeezed states in the superposition are often referred to as the peaks, teeth, or lobes of the GKP state. A common metric for the quality of a GKP state is the level of squeezing in each of its teeth. The five peaks of Fig. 6 are separated by 2√π in the q quadrature and each has roughly 12 dB of squeezing. As used herein, a state is squeezed when the noise in one variable is reduced below the symmetric limit at the expense of the increased noise in the conjugate variable such that the Heisenberg uncertainty relation is not violated.

One way of generating a GKP state of light is the use of Gaussian Boson Sampling (GBS) sources, which may alternately be referred to as Gaussian Boson Samplers or Gaussian Boson Circuits. In some GBS sources, squeezed states of light in a few optical modes are passed through an interferometer including phase shifters and beamsplitters before all but one of the modes are measured using photon-number-resolving (PNR) detectors. The **PNR** measurement is the non-Gaussian resource that allows for exotic wavefunctions to be produced. **PNR** measurement can be expected to be performed at cryogenic temperatures, by contrast with some other components of a GKP state factory and may therefore be perceived as being costly.

As an example, in the ideal, lossless case, using three optical modes, a specific PNR pattern - e.g., occurring with a probability of ~0.1% - heralds a state with -96% fidelity to a GKP |0> state with ~10 dB of squeezing and a peak spacing of 2π. Since these sources are probabilistic (albeit heralded), many copies of GBS circuits can be used in parallel to boost the probability of a GKP state being generated. As used herein, for a desired state to be "heralded" means that a device provides a signal that the desired state has been successfully generated / produced. This can involve determining that the fidelity of the state compared to the heralded state is above a given threshold.

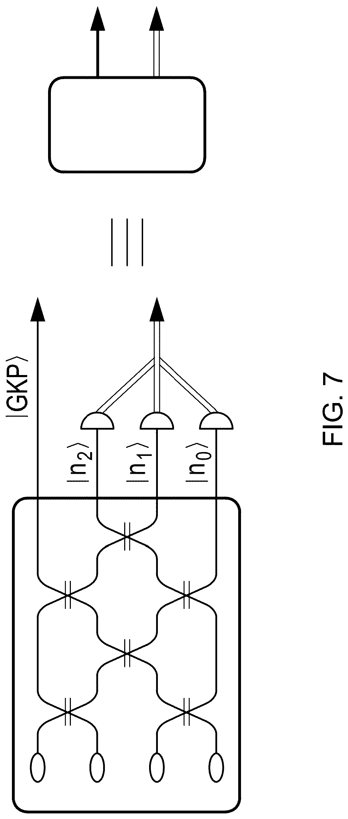

Fig. 7 shows an example of a Gaussian Boson Sampling (GBS) source, compatible with some embodiments, namely in the context of GKP state factories. Additional details regarding GBS sources can be found, by way of example only, in "Blueprint for a scalable photonic fault-tolerant quantum computer," J.E. Bourassa, et al., Quantum, 5:392 (2021) ("Bourassa"). Referring to Fig. 7, displaced squeezed states in different spatial modes enter an interferometer, and all but one (i.e., *n* ₀ through *n* ₂) are sent to PNR detectors. The double lines represent classical logic, which can be used to trigger a switch on the emitted port. The right portion of Fig. 7 is a simplified representation of a single GBS device. Different types of GBS sources exist and the one shown in Fig. 7 is provided solely as an example.

A technique for addressing low probability of generation of a GKP sensor state from individual GBS sources is to use multiplexing. A multiplexer can include a plurality of GBS sources, and a network of reconfigurable beamsplitters heralded on the PNR outcomes. The multiplexer can shuttle the output of a successful GBS source to the next component.

Another technique for addressing low probability of generation of a GKP sensor state is swapping out. Swapping out refers to swapping out an output of a GBS source with a squeezed state of light, which can be produced deterministically, when it is detected that the output of the GBS source is not a GKP sensor state. This technique can be combined into a multiplexer such that when all GBS sources attached to a given MUX fail, the output of the MUX can be "swapped out" for a squeezed state of light, which can be produced deterministically.

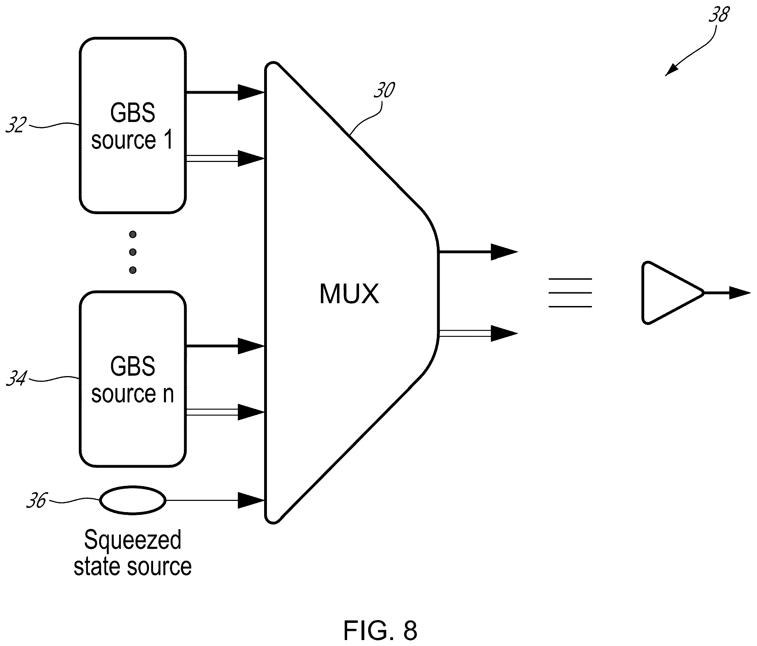

Fig. 8 shows an example multiplexer (MUX) 30, compatible with some embodiments. The output states of several GBS sources 32, 34 and one squeezed state (e.g., an output of a squeezed state source 36) are input to the MUX. If at least a single GBS source heralds a finite-energy GKP state, then that state is outputted. Otherwise, the squeezed state is outputted. A downside of swapping in squeezed states is that they may be treated as errors, and there can be a limit to how many such swap-ins can be tolerated until the quantum error correction scheme fails. In some embodiments, the overall system shown in Fig. 8 may be referred to as a GBS source 38 and used as such.

GKP quantum states, namely GKP sensor states (square lattice quantum states), can be encoded in photons and used in the context of performing quantum computations based on photonic architectures. Photonic architectures can be implemented using waveguides in the form of optical fiber circuits or solid state optical components, and there is commercial interest which is driven by the possibility of integrating waveguides and optical components in the form of integrated circuits, sometimes referred to as "photonics on chip", which can be seen as using photons instead of electrons in the context of integrated circuits.

Challenges associated with practical implementations of a GKP state factory, which can be addressed by some embodiments of the present disclosure, include:

### State generation probability

The example three-mode device discussed above can generate a GKP state with a probability of ~0.1%. This can place a significant burden on the MUX, since for the MUX to boost the probabilities to 25%, 50%, 75%, 99% could involve, for example, ~300, 700, 1400, or 4600 GBS sources (multiply by three to get the number of squeezers), with switch tree depths of 10, 11, 12, 14, respectively. These are the overheads for generating a single node in the cluster state. The cluster state includes a plurality of optical modes referred to herein as a "macronode."

### Quality of GKP states and scalability of GBS devices

Although some system architectures described herein are tolerant to swapping out GKP states for squeezed states (e.g., multiplexing to 100% is not required), leveraging the swap-outs may involve a need to improve the quality of GKP states (e.g., an amount of per-peak squeezing). Since the MUX improves the probability, but potentially not the quality, of the GBS output, larger GBS devices may be used (by way of example) to enhance the state quality. Increasing the size of GBS devices, however, is not necessarily a scalable way to improve GKP states, since increasing the size of GBS devices can involve more modes, deeper interferometers, and conditioning on more PNR outcomes, thereby potentially reducing the probability of successful outcomes.

### Loss

Tied in with the previous two points, generating states with higher quality while maintaining a high-enough output probability may involve the use of GBS interferometers and/or MUX switching networks with larger depth(s). The associated increase in the number of optical components could result in higher losses.

Another way of addressing the low probability of generation of a GKP sensor state with a GBS source can be referred to as breeding, and can involve producing GKP sensor states, or other types of GKP states, from "imperfect" states (i.e., states which are not "suitable" GKP sensor states - such as states having a fidelity which is too low to be considered satisfactory for use as is). Breeding can involve a cascade, or tree-like circuit, with lesser and lesser outputs at each successive one of one or more breeding stages. Accordingly, breeders can be included as part of or constitute state factories.

A system performing the function of breeding can be referred to as a "breeder system", or "breeder". In practice, a breeder system may also be considered to include the subsystems which produce the input states of the first breeding stage, which can each include single or multiple GBS sources and potentially more complex functions such as swapping-in or multiplexing ability. Moreover, a breeder system may also include additional functions applied to outputs of one or more breeding stages, such as multiplexing or swapping-in. Indeed, a typical embodiment may include all of the above : multiple GBS devices in parallel, picking some of the best states to work with, breeding them to produce GKP states, and finally swapping in squeezed states when the breeding fails. Indeed, multiplexing can be integrated into the breeding network (which is typically referred to as "hybrid MUX-breeding") where some of the beam splitters in the breeding network can also operate as switches by setting the beam splitter angles to 0 or pi/2. A breeder can thus be considered as one type of state factory.

Accordingly, GBS source design, multiplexing (e.g., adding a lot more GBS devices in parallel and picking a handful of best output states) swapping in and/or breeding are ways to address the low probability of generation of a GKP sensor state from individual GBS sources. Different embodiments may include different combinations of the above techniques as part of a state factory. The state factory, such as a GKP state factory for instance, can be used to generate states of light for use in quantum computing. In the context of a photonic quantum computer, for instance, an example of which is presented in Fig. 1, the breeder and/or state factory having a breeder can form part of or constitute a source module 102, and the output of the source module 102, such as the output of the breeder for instance, can be provided as an input to a stitcher 104, such as a time and/or space stitcher, which can create a cluster state used as a resource in quantum computing performed with a photonic quantum processing unit (QPU) 106.

A breeder may have one or more stages. Indeed, if, for instance, the input states of the first stage of the breeder are high-quality states that have multiple peaks (e.g., 3-peak or 4-peak states, or more - which would typically involve relatively complex GBS source devices, potentially making use of multiplexing and/or swapping out) then it might be sufficient in some embodiments to only do one round of breeding. In practice, it may be difficult to generate such high-quality states as input states, or, otherwise said, it may be easier to add breeding stages than to achieve such quality of input states, in which case a breeder system designer may elect a design having more breeding stages and less complex GBS source devices.

A first approach to breeding, which will be referred to herein as rectangular lattice breeding, is described in greater detail in US patent publication 2024/0346357. In this first approach, certain "imperfect" states of light can be used in breeding. While such an approach can be suitable to a certain degree, it will be understood that increasing the types of states of light which can be used in breeding can be beneficial.

In accordance with the first approach, some states of light which have a rotation relative to a state which has periodic (equal or unequal) spacing in both quadratures, or otherwise said, a rotation relative to a rectangular lattice state, may be rejected. Such states will be referred to herein as "sheared" states. In this specification, the expression "rotation" more specifically, and typically, relates to a phase rotation, or otherwise said, a rotation in phase space.

It was found that in many embodiments where sheared states were heralded, the shearing could be removed by imparting rotations in the context of breeding, thereby allowing their use in the creation of rectangular, and even square lattice GKP (i.e. sensor state), by applying a suitable number of breeding stages. This can result in an increase in the types of states of light which can be used in breeding.

In order to characterize how good a given protocol is to generate magic states, one may define a figure of merit (FOM) for the quality of the state generated. Consider the following FOM: $FOM = {max}_{i , j = \left(x, y, z\right)} \left|\left〈\frac{{\hat{σ}}_{i} \pm {\hat{σ}}_{j}}{\sqrt{2}}\right〉\right|$ where *σⱼ,j = x, y, z* are the Pauli operators of the GKP encoded qubits corresponding to displacement in phase space. When the operator in (4) is equal to $\left({\hat{σ}}_{x}+{\hat{σ}}_{z}\right) / \sqrt{2}$*,* this corresponds to another representation of the Hadamard operator (i.e., $\hat{H} = \left({\hat{σ}}_{x}+{\hat{σ}}_{z}\right) / \sqrt{2}$ also acts as a Hadamard gate when restricted to the GKP subspace). The other operators in (4) for *i* ≠ *j* are the Clifford equivalents to the Hadamard gate. This FOM has the advantage of taking into account all Clifford equivalent states and also attains its maximum value in the GKP encoded space. Also, for a given mean value of a Pauli operator, and given that ${\hat{σ}}_{x} = {e}^{- i \sqrt{π} \hat{p}}$*,* ${\hat{σ}}_{z} = {e}^{i \sqrt{π} \hat{q}}$ and *σ̂_{y} = iσ̂ₓσ̂_{z},* if 〈*σ̂ₓ*〉 *= X* over a state |*ψ*〉 then $\left〈{\hat{σ}}_{x}\right〉 = {Xe}^{- i \sqrt{π} t}$ over the state *e^{itq̂}*|*ψ*〉 (where *e^{A}e^{B} = e^{B}e^{A}e*^{[*A,B*]} was used), and similarly for the mean values of the rest of the Pauli operators. Therefore, any phase of the mean values of the Pauli operators can be compensated by displacing the state by the correct amount. That is, this figure of merit is insensitive to whether the magic state is displaced in phase space; this is valuable because known displacements on the state do not affect their utility in the cluster state architecture, as the displacement can be compensated for in software via an update to the measured homodyne values on the cluster state. For that reason, the FOM used herein will be $FOM = {max}_{i , j = \left(x, y, z\right)} \frac{\left|\left〈{\hat{σ}}_{i}\right〉\right| + \left|\left〈{\hat{σ}}_{j}\right〉\right|}{\sqrt{2}} .$

The mean value of the GKP code stabilizers ${\hat{S}}_{p} = {\hat{σ}}_{x}^{2} = {e}^{- i 2 \sqrt{π} \hat{p}}$ and ${\hat{S}}_{q} = {\hat{σ}}_{z}^{2} = {e}^{- i 2 \sqrt{π} \hat{q}}$ can be used, despite not being observables, as a way to quantify how well a given state approximates an ideal GKP state.

Given the state of an optical mode that is supposed to encode a qubit, one can imagine performing perfect error correction on that state. Perfect error correction will project the optical mode into a perfectly encoded qubit state. Which qubit state is obtained and with what probability depends on the input mode's state and the two quadrature measurement outcomes that serve as error syndromes during the error correction. If the input mode's state is pure, the output qubit state will also be pure given the quadrature measurements. Thus, one can quantify the quality of any given input mode state that is supposed to encode a qubit state by computing the fidelity between the state obtained after perfect error correction and the desired qubit state. Because the output state is random, it may be desirable to know the probability of obtaining a qubit state with a high fidelity to the desired state, and to this end one can plot cumulative distribution functions of fidelity.

As well understood by persons having ordinary skill in the art, in any real GKP quantum computer, the error correction must be imperfect because the helper modes must have finite energy and various other error sources will be present. It can be presumed that the fidelities of encoded qubits obtained after perfect error correction of an input mode will upper bound the performance of that mode's state in a real GKP quantum computer. However, the sense in which "performance" is upper bounded is not yet clear because the fidelity of a qubit that is imperfectly encoded in a mode is not completely understood. Nevertheless, the qubit fidelity obtained after perfect error correction provides a quantification of how well a mode's state represents a qubit state. The precise relationship between this fidelity and the figure of merit in Eq. (5) is an open problem.

One method to quantify the sufficient fidelity is to attain the minimum fidelity necessary for a given target non-Pauli eigenstate to be used to prepare fault-tolerantly a corresponding logical non-Pauli eigenstate in an outer quantum error correcting code, for example using magic state injection and distillation protocol. The specific values required depends on the specific protocols and codes used.

The procedure for computing the qubit fidelity of a mode can involve calculating the Wigner function of the mode and then displacing the Wigner function according to the syndrome quadrature measurements. One then computes the overlap integral of the mode's displaced Wigner function with the Wigner functions of the three GKP-Pauli states and a fourth Wigner function that projects onto the GKP code space. These integrals give the three Bloch vector components of the resulting qubit state and the probability of obtaining that qubit state. The Bloch vector components allow one to calculate fidelity to any qubit state. Let us take as an example the case of the fidelity of the resulting qubit to the closest state that can be rotated to the Hadamard eigenstate with +1 eigenvalue by Clifford rotations, which is referred to as an "H-type state." Fidelity to an H-type state can be calculated with the formula in Eq. (5), though here the Pauli expectation values are understood as Bloch vector components of the perfectly encoded qubit state. Accordingly, in an embodiment, a state can be considered to be an H-type state if its fidelity to H-type magic states is of at least 0.853.

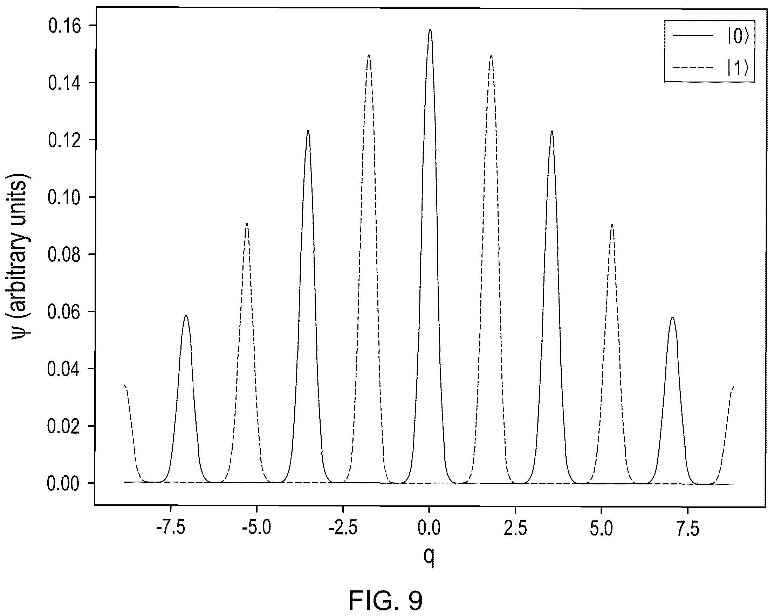

Fig. 9 presents an example of how qubit logic states |0〉 and |1〉 can be encoded on continuous variable parameters of a quantum system using the GKP encoding scheme.

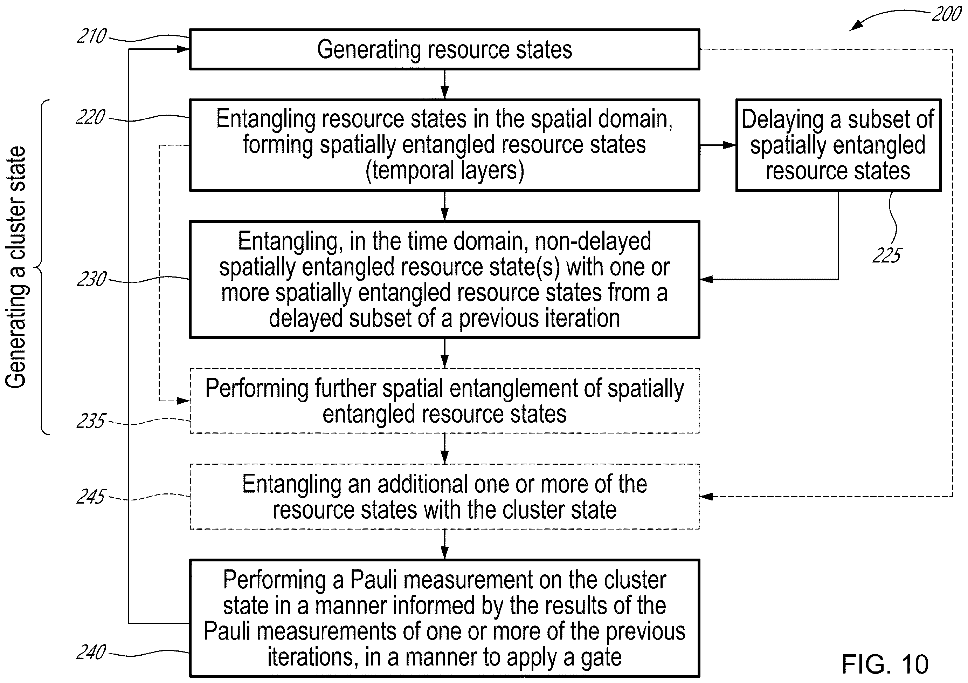

It will be understood that in accordance with one embodiment, magic states as presented above can be useful in the context of a quantum computer operating based on measurement-based quantum computation, such as, for instance, quantum computer 100 shown in Fig. 1. A flow chart presenting an example process 200 of performing a quantum computation in the context of a quantum computer operating based on measurement-based quantum computation is presented in Fig. 10.

Referring to Fig. 10, a first step of the process 200 involves generating 210 resource states. Various resource states may be generated. Resource states may include one or more Pauli eigenstate and one or more non-Pauli eigenstate (e.g., a magic state). In the case of generating a magic state as a resource state, the step of generating 210 resource states can involve, such as detailed above, forming a first and a second GKP sensor states in a quantum system forming part of source module 102. The step of generating 210 a resource state can include performing a quantum entanglement between the GKP sensor states in the quantum system, and more specifically in the source module 102. The measurement can be applied to a first subset of the modes of the resulting entangled state in a manner to generate the magic state forming a non-Clifford resource, which can be referred to as a resource state in this example. The step of generating 210 resource states may also include generating one or more Clifford resources, such as a Pauli eigenstate, in the source module 102, and such one or more Clifford resources may also be referred to as resource states. A plurality of resource states may be built simultaneously.

Resource states may further include one or more squeezed states. Light can be said to be in a squeezed state when its electric field strength for some phases has a quantum uncertainty smaller than that of a coherent state. Indeed, in some cases, if generating a Pauli eigenstate is unsuccessful, a squeezed state may be used in its stead, and be treated as a known error, and the quantum processing process may be resilient to a certain number of known errors.

A second step of the process 200 involves entangling 220 some of the resource states in the spatial domain to form temporal layers. **In** an embodiment, one or more Clifford resources and the non-Clifford resource can be entangled 220 to one another by the stitcher 104, producing states which may be referred to herein as spatially entangled resource states. A plurality of spatially entangled resource states may be built simultaneously and may be referred to as a temporal layer. In an embodiment, a first subset of spatially entangled resource states in a temporal layer may comprise only Clifford resources, while a second subset of spatially entangled resource states in the temporal layer may comprise a Clifford resource and a non-Clifford resource.

A subset of the spatially entangled resource states in a temporal layer may be delayed at 225, such as by being directed to a delay line (typically consisting of optical fiber), forming a delayed subset of spatially entangled resource states. One (or more) other subsets of the spatially entangled resource states in the temporal layer may not be delayed and may be referred to as a non-delayed subset of spatially entangled resource states.

A third step of the process 200 involves entangling 230, in the time domain, spatially entangled resource states of a non-delayed subset with spatially entangled resource states of a delayed subset from a previous temporal layer, e.g., from a previous iteration of process 200. In one embodiment, this latter step may complete the generation of a cluster state. In another embodiment, additional spatially entangled resource states from another non-delayed subset stemming from the same temporal layer may further be spatially entangled 235 with the entangled non-delayed subset and delayed subsets to form the cluster state, for instance.

A fourth step of the process 200 involves performing a Pauli measurement on the cluster state 240. The Pauli measurement can be performed in an informed manner, based on the results of one or more Pauli measurements made to the cluster state in previous iterations of the process 200, such that the Pauli measurement applies a gate.

The steps 210, 220, 225, 230, and 240 of the process 200 can be repeated multiple times, in a manner to apply a sequence of gates, until the quantum computation is complete. It will be noted for additional clarity that in the time domain, the performing of the Pauli measurement may be performed after the generating 210 of resource states which will serve in the next Pauli measurement 240. Indeed, multiple temporal layers may simultaneously exist in the quantum computer at a given point in time, and in an example quantum computer, several temporal layers may be built before making the first Pauli measurement 240.

The measurements may be performed by the measurement module 108.

In an embodiment, entangling 220 resource states can include entangling a magic state with a Pauli eigenstate, and potentially other resource states, in the spatial domain, to form a spatially entangled resource state which may be used as a non-Clifford resource, included in the cluster state, in the process of performing a quantum computation.

In some other embodiments, the cluster state may not include non-Clifford resource states, and non-Clifford resource states may rather be entangled with one or more Clifford resource states in the cluster state immediately before the Pauli measurement is performed, such that the Pauli measurement applies a non-Clifford gate. In such an alternate embodiment, temporal layers may comprise only Clifford resources, and non-Clifford resources generated by the source module 102 may be entangled with one or more of the Clifford resources in the cluster state immediately before measurement in the quantum processing unit 106, thereby implementing a non-Clifford gate. For instance, the step of entangling 220 resource states in the spatial domain may include entangling 220 only one or more Pauli eigenstate, optionally with one or more squeezed state, into spatially entangled resource states forming temporal layers. The steps of delaying 225, entangling 230 in the time domain, and more generally generating the cluster state, can be performed using these latter spatially entangled resource states. The H-type magic state produced when generating 210 resource states may be entangled 245 with the cluster state subsequently to the generation of the cluster state, e.g., subsequently to step 230, and nonetheless used as a non-Clifford resource for the purpose of the quantum computation.

In any of the above embodiments referring to Fig. 10, a subset of the Clifford resource states in the cluster state may instead be squeezed states (generated by the source module 102, for example).

**It** will be understood that the expression "classical computer," or simply "computer" for short, as used herein, is not to be interpreted in a limiting manner. It is rather used in a broad sense to generally refer to the combination of some form of one or more processing units and some form of memory system accessible by the processing unit(s). The memory system can be of the non-transitory type. The use of the expression "computer" in its singular form as used herein includes within its scope the combination of two or more computers working collaboratively to perform a given function. Moreover, the expression "computer" as used herein includes within its scope the use of partial capabilities of a given processing unit. Example computers include supercomputers, desktops, laptops, smartphones, smart watches, less elaborated controller devices, etc.

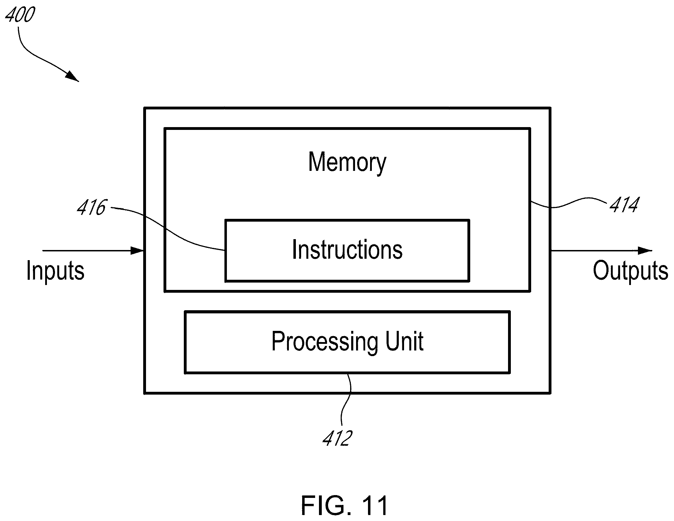

An example computer 400 is presented in Fig. 11. In this example, the computer 400 includes a processing unit 412 and a memory system 414 storing instructions 416. A controller can be embodied as a computer 400 when it has a processor and a memory. The computer 400 (or controller) can be a classical computer (operating based on classical bits) or a quantum computer (operating based on quantum qubits) unless explicitly indicated.

A processing unit 412 can be embodied in the form of a general-purpose microprocessor or microcontroller, a digital signal processing (DSP) processor, an integrated circuit, a field programmable gate array (FPGA), a reconfigurable processor, or a programmable read-only memory (PROM), to name a few examples.

The memory system 414 can include a suitable combination of any suitable type of computer-readable memory located either internally or externally, and accessible by the processor in a wired or wireless manner, either directly or over a network such as the Internet. A computer-readable memory can be embodied in the form of random-access memory (RAM), read-only memory (ROM), compact disc read-only memory (CDROM), electro-optical memory, magneto-optical memory, erasable programmable read-only memory (EPROM), electrically erasable programmable read-only memory (EEPROM), or ferroelectric RAM (FRAM), to name a few examples.

A computer 400 can have one or more input/output (I/O) interfaces to allow communication with a human user and/or with another computer via an associated input, output, or input/output device such as a keyboard, a mouse, a touchscreen, an antenna, a port, etc. Each I/O interface can enable the computer to communicate and/or exchange data with other components, to access and connect to network resources, to serve applications, and/or to perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g., Wi-Fi, Bluetooth, WiMAX), SS7 signaling network, fixed line, local area network, or wide area network, to name a few examples.

It will be understood that a computer can perform functions or processes via hardware or a combination of both hardware and software. For example, hardware can include logic gates included as part of a silicon chip of a processor. Software (e.g., an application or process) can be in the form of data such as computer-readable instructions stored in a non-transitory computer-readable memory accessible by one or more processing units. With respect to a computer or a processing unit, the expression "configured to" relates to the presence of hardware or a combination of hardware and software which is operable to perform the associated functions. Different elements of a computer, such as processor and/or memory, can be local, in part remote, or in whole remote and/or distributed and/or virtual.

The instructions executable by a processor for performing the methods in the context of the present disclosure may be implemented in a high-level procedural or object-oriented programming or scripting language, or a combination thereof, to communicate with or assist in the operation of a computer system, for example the controller. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be implemented by way of a non-transitory computer-readable storage medium having a computer program stored thereon. The computer program may comprise computer-readable instructions which cause a computer, or more specifically the processing unit of the computing device, to operate in a specific and predefined manner to perform the functions described herein.

Computer-executable instructions may be in many forms, including program modules, executed by one or more computers or other devices. Generally, program modules include routines, programs, objects, components, data structures, etc., that perform tasks or implement abstract data types. Typically, the functionality of the program modules may be combined or distributed as desired in various embodiments. The technical solution of embodiments may be in the form of a software product. The software product may be stored in a non-volatile or non-transitory storage medium, which can be a compact disk read-only memory (CDROM), a USB flash disk, or a removable hard disk. The software product includes several instructions that enable a computer device (personal computer, server, or network device) to execute the methods provided by the embodiments.

The embodiments described herein are implemented by physical computer hardware. The embodiments described herein provide useful physical machines and particularly configured computer hardware arrangements. The embodiments described herein are directed to electronic and optical machines and methods implemented by electronic and optical machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

As can be understood, the examples described above and illustrated are intended to be exemplary only. The scope is indicated by the appended claims.

## Claims

1. A system for preparing Gottesman-Kitaev-Preskill (GKP) non-Pauli eigenstates of light comprising:
a first state factory configured to generate a sequence of first sensor states;
a second state factory configured to generate a sequence of second sensor states;
one or more beamsplitters (16) optically coupled to the first state factory and to the second state factory, operable to interact the first sensor states with the second sensor states in a manner to generate entangled cluster states having multiple modes; and
a homodyne detector (18) optically coupled to an output of the one or more beamsplitters (16) and operable to perform a homodyne measurement on a second subset of the modes at a measurement angle in phase space, the homodyne measurement causing the encoding of the non-Pauli states in a first subset of the modes.

2. The system of claim 1 wherein the system comprises a quantum computer (100), the quantum computer (100) having the first state factory, the second state factory, the beamsplitter (16), the homodyne detector (18), and a controller having a processor and a memory, the memory having stored thereon instructions operable by the processor to cause the quantum computer (100) to perform the steps of generating the plurality of successive first sensor states, generating the plurality of successive second sensor states, generating the plurality of successive entangled cluster states, and encoding the GKP non-Pauli eigenstates.

3. The system of claim 1 wherein the entangled cluster state has only two modes including a first mode and a second mode, and wherein the beamsplitter (16) is a 50-50 beamsplitter, wherein said interacting includes applying a logical CZ gate with the beamsplitter (16).

4. The system of claim 3 wherein the first subset of the modes is a first mode, and the second subset of the modes is a second mode, the encoding includes teleporting a gate onto the second mode and rotating the second mode's logical state on the Bloch sphere.

5. The system of claim 1 wherein
the entangled cluster state has more than two modes, the first subset being mutually exclusive to the second subset; and
the said beamsplitter (16) is a first beamsplitter, wherein said interacting involves at least a second beamsplitter in addition to the first beamsplitter.

6. The system of any one of claims 1 to 4 further comprising applying a rotation to the entangled cluster state at a rotation angle, the rotation angle being controlled based on the homodyne measurement at the measurement angle to result in said encoding of the first subset of the modes to encode the non-Pauli eigenstate.

7. The system of any one of claims 1 to 4 further comprising controlling the measurement angle for said homodyne measurement to result in said encoding of the first subset of the modes to encode the non-Pauli eigenstate.

8. The system of any one of claims 1 to 7 wherein the non-Pauli eigenstate is a magic state.

9. The system of any one of claims 1 to 8 wherein the first sensor state and the second sensor state are squeezed GKP sensor states.

10. The system of any one of claims 1 to 9 wherein said generating a first sensor state and said generating a second sensor state are performed using multiple Gaussian Boson Sampling (GBS) devices and multiplexing.

11. The system of any one of claims 1 to 10, further comprising
generating a Pauli eigenstate, generating a cluster state including entangling at least the non-Pauli eigenstate with the Pauli eigenstate, and applying a gate to the cluster state including performing a Pauli measurement on the cluster state; and
repeating the steps of generating the cluster state and performing the Pauli measurement on the cluster state over n iterations, until a quantum computation is completed, wherein said performing the Pauli measurement of a given one of the n iterations is based on results of the Pauli measurement of one or more previous ones of the n iterations, in a manner to apply the corresponding gate.

12. The system of claim 11 wherein said generating the cluster state at a given one of the n iterations further includes
producing a plurality of spatially entangled resource states,
delaying a subset of the plurality of spatially entangled resource states, and
entangling, in the time domain, a subset of the spatially entangled resource states which have not been subject to the delaying with the subset of delayed resource states from a previous one of the n iterations.

13. The system of any one of claims 1 to 10 further comprising
generating a cluster state, entangling the non-Pauli eigenstate with the cluster state, and applying a gate to the cluster state entangled with the non-Pauli eigenstate, said applying a gate including performing a Pauli measurement on the cluster state entangled with the non-Pauli eigenstate; and
repeating the steps of generating the cluster state and performing the Pauli measurement over n iterations, until a quantum computation is completed, wherein said performing the Pauli measurement of a given one of the n iterations is based on results of the Pauli measurement of one or more previous ones of the n iterations, in a manner to apply the corresponding gate.

14. The system of claim 13 wherein said generating the cluster state at a given one of the n iterations further includes
producing a plurality of spatially entangled resource states,
delaying a subset of the plurality of spatially entangled resource states, and
entangling, in the time domain, a subset of the spatially entangled resource states which have not been subject to the delaying with the subset of delayed resource states from a previous one of the n iterations.

15. A method to prepare a Gottesman-Kitaev-Preskill (GKP) non-Pauli eigenstate comprising:
generating a first sensor state;
generating a second sensor state;
generating an entangled cluster state having multiple modes, including interacting the first sensor state with the second sensor state in a beamsplitter (16); and
encoding the GKP non-Pauli eigenstate in a first subset of the modes, including performing a homodyne measurement of a second subset of the modes at a measurement angle in phase space.
